# EUROPÄISCHE PATENTSCHRIFT

(11) **EP 0 445 498 B1**
(45) Veröffentlichungstag und Bekanntmachung des Hinweises auf die Patenterteilung: **27.07.1994**
(21) Anmeldenummer: 91100020.6
(22) Anmeldetag: 02.01.1991
(51) Int. Cl.: B01F 3/12, C09B 67/46

(54) **Verfahren zum Herstellen einer Flüssigkeits-Feststoffdispersion**
Method for making a liquid solid dispersion
Procédé pour la fabrication d'une dispersion fluide-solide

(30) Priorität: 02.02.1990 DE 4003123
(43) Veröffentlichungstag der Anmeldung: 11.09.1991
(73) Patentinhaber: Erich Netzsch GmbH & Co. Holding KG, D-95100 Selb (DE)
(72) Erfinder: Schertenleib, Peter, W-8673 Rehau (DE)
(74) Vertreter: Goetz, Rupert, Dipl.-Ing.

(56) Entgegenhaltungen:
- DE-A- 3 409 326
- GB-A- 1 196 629
- US-A- 3 246 683

## Beschreibung

Es ist bekannt, daß die Benetzung von feinen Pulvern wie Pigmenten, Füllstoffen und insbesondere Kohlenstaub zu beträchtlichen Problemen führt, da solche Pulver von den meisten infrage kommenden Dispersionsmedien nur schlecht benetzbar sind. Deshalb waren bisher zur Herstellung von Dispersionen derartiger Pulver langwierige und aufwendige Maßnahmen erforderlich. So benötigt das Einrühren von Pulver in ein Dispersionsmedium meist mehrere Stunden, bis eine brauchbare Dispersion erreicht wird, die von Klumpen und Agglomeraten frei ist. Um die Benetzung durch Veränderung der Grenzflächenspannung zu verbessern, hat man als Netzmittel oberflächenaktive Stoffe eingesetzt. Dabei ist aber nachteilig, daß das Netzmittel an dem Pulver haften bleibt und dieses daher verunreinigt.

Aus der DE-C 11 95 720 ist ein Verfahren zum Benetzen von schwer benetzbaren Pulvern mit einer Flüssigkeit bekannt, bei dem das Pulver in den Strahl eines aus einer Düse mit mindestens Schallgeschwindigkeit ausströmenden Gas/Flüssigkeits-Gemisches nahe der Düsenmündung eingeführt wird. Dies ist - sowohl was die Anlage als auch die Betriebsführung anbelangt - ein recht aufwendiges Verfahren.

Die GB-A-1 196 629 offenbart ein Verfahren zur Herstellung einer Suspension (fest/flüssig), bei dem ein schwer benetzbares Pulver mit einem flüssigen Dispersionsmedium benetzt wird. Zu diesem Zweck wird das zu suspendierende Pulver in einem Vakuumbehälter mit einem Vakuum beaufschlagt, entsprechend einem Druck von weniger als 1 Torr. Im Anschluß daran wird der Vakuumbehälter von der Vakuumpumpe abgetrennt und sodann eine Flüssigkeit eingebracht, die das Pulver benetzt.

Aufgabe der Erfindung ist es, mit einem technisch einfachen und sicheren Verfahren, beliebige Pulver in einem beliebigen Dispersionsmedium zu dispergieren, auch wenn das Dispersionsmedium das Pulver aufgrund seiner Oberflächeneigenschaften nach bekannten Verfahren schwer benetzen würde.

Die Aufgabe wird durch das Verfahren nach dem Hauptanspruch gelöst. In den Unteransprüchen sind vorteilhafte Ausgestaltungen des erfindungsgemäßen Verfahrens angegeben.

Bei den zu benetzenden Pulvern handelt es sich häufig um Feststoffe mit einer Primär-Teilchengröße unter 0,5 µm. Derart feine Pulver neigen in hohem Ausmaß zum Agglomerieren, wodurch Aggregate mit Größen von bis zu mehreren 100 um entstehen. In den Agglomeraten befinden sich zwischen den Primärteilchen luftgefüllte Hohlräume, und die Teilchen und Agglomerate sind meist mit einer dünnen Lufthaut überzogen, die ein Benetzen mit einer Flüssigkeit noch zusätzlich erschwert.

Bei dem erfindungsgemäßen Verfahren wird diese Luft in einer ersten Verfahrensstufe gegen den Dampf des Dispersionsmediums ausgetauscht. Dies kann in verschiedener Weise geschehen. So kann man durch Evakuieren der Pulverschüttung deren Luftgehalt weitestgehend reduzieren. Man kann aber auch die Pulverschüttung zuerst soweit erhitzen, wie das Material des Pulvers dies zuläßt, und die ausgetriebene Luft abpumpen.

Ist der Luftgehalt der Pulverschüttung genügend abgesenkt, wird in diese der Dampf des Dispersionsmediums eingeleitet. Dies kann unter Druck oder stoßweise oder gepulst geschehen. Es kann nötig sein, das Luft-Absaugen und Dampf-Einpressen einige male zu wiederholen, damit möglichst alle Luft aus dem Pulver entfernt wird und keine Oberflächenbereiche oder Poren übrigbleiben, die wegen der Lufteinschlüsse nicht benetzt werden können.

Wenn die Luft gegen den Dampf des Dispersionsmediums ausgetauscht worden ist, wird das Pulver soweit gekühlt, daß der Dampf des Dispersionsmediums kondensiert. Dies geschieht innerhalb der Freiräume zwischen den Pulverteilchen, in den Hohlräumen der Agglomerate und an allen Oberflächen, so daß das Pulver vollständig benetzt wird. Die Zuführung von Dampf des Dispersionsmediums und dessen Kondensation wird solange weitergeführt, bis man die angestrebte Dispersion erhalten hat. Dabei können auch Produkte eingearbeitet werden, die für eine End-Anwendung benötigt werden.

Die Bildung von Agglomeraten während der Benetzung des Pulvers wird eingeschränkt, wenn der Dampf des Dispersionsmediums nicht kontinuierlich in die evakuierte Pulverschüttung eingeleitet wird, sondern stoßweise oder gepulst. Sollten sich trotzdem Agglomerate bilden, so kann man diese leicht zerstören, z.B. durch Scherkräfte bei schnellem Rühren oder mechanische Schwingungen bei Rütteln mit entsprechender Frequenz oder durch Ultraschall-Energie oder eine Kombination dieser Maßnahmen. Dies kann gleichzeitig mit dem Luft/Gas-Austausch oder nach der Benetzung des Pulvers geschehen.

Das erfindungsgemäße Verfahren in der Evakuierungs-Variante zeichnet sich durch den besonderen Vorteil aus, daß bestehende Anlagen dafür adaptiert werden können, so daß keine kostspieligen Anlagen benötigt werden. Außer einem Verdampfer für das Dispergiermedium und einem Gefäß, in welchem der Luft/Gas-Austausch und die Dampf-Kondensation stattfindet, ist neben den üblichen Leitungen, Pumpen und Dosiereinrichtungen und vielleicht noch einem Gerät für die mechanische Behandlung der Agglomerate, wie sie sich in den verschiedensten Ausführungsformen auf dem Markt befinden, nichts nötig. Auch für die Wirbelschicht-Variante sind übliche Anlagen, wie sie in den verschiedensten Ausgestaltungen am Markt sind, brauchbar.

Schließlich ist auch zu beachten, daß der Zeitaufwand für die Benetzung von üblicherweise einigen Stunden durch das erfindungsgemäße Verfahren auf einige Minuten herabgesetzt wird.

Das erfindungsgemäße Verfahren eignet sich besonders für die Benetzung von Pigmenten und Füllstoffen zur Herstellung von Lacken, Anstrichmitteln aller Art, in der Keramik-und Porzellan-Industrie, aber auch für die Herstellung eines pumpfähigen Schlamms von Kohlenstaub, um diesen verfeuern zu können.

Besondere Vorteile bringt das erfindungsgemäße Verfahren durch die wirksame Benetzung von Farbstoffen für Druckfarben, von Magnetpulvern zur Herstellung einer Dispersion, die dann auf einen Informationsträger aufgebracht wird, und von Füllstoffen, um deren Einbringung in Kunststoff und dergleichen zu erleichtern. Vorteile ergeben sich auch in Anwendungsbereichen, in denen ein Zweiphasensystem bisher zu Dispergierproblemen führt. Beispielsweise läßt sich das erfindungsgemäße Verfahren bei der Aufbereitung von Pulvern für die pharmazeutische Industrie anwenden, um die Verpreßbarkeit der Pulver zu Tabletten od.dgl. zu verbessern.

Als Dispersionsmedium für das erfindungsgemäße Verfahren kommen alle verdampfbaren Stoffe, die für diesen Zweck geeignet sind, infrage, also Wasser, Kohlenwasserstoffe und Halogenkohlenwassersoffe, üblicherweise als Lösungsmittel angewandte Stoffe wie Alkohole, Ether, Ketone, Ester, aber auch Öle, Erdöl-Fraktionen, Lackrohstoffe.

Das erfindungsgemäße Verfahren wird an folgenden Beispielen weiter erläutert:

### Beispiel 1

Es wurde eine Offset-Druckfarbe hergestellt aus 18 kg Ruß als Farbstoff und 41 kg eines leicht verdampfbaren Mineralöls als Dispersionsmedium. Die Benetzung nach dem erfindungsgemäßen Verfahren erfolgte in einem Mischer mit Rühraggregat und Heiz/Kühl-System, einem Anschluß an eine Vakuumpumpe sowie einer Zuleitung für den Dampf des Kohlenwasserstoffs. Das Mineralöl wurde in einem beheizbaren Verdampfer verdampft.

Bei diesem diskontinuierlichen Verfahren wurde in den Mischer die Pulvercharge eingebracht und die Vakuumpumpe betätigt, bis ein stabiler Unterdruck erreicht war. Während dieser Zeit arbeitete das Heiz/Kühl-System als Heiz-System und der Verdampfer begann mit der Verdampfung des Dispersionsmediums. Sobald die Luft aus dem Pulver weitestgehend abgepumpt war, wurde die Vakuumleitung geschlossen und die Dampfleitung geöffnet, so daß der Dampf des Mineralöls den ganzen Raum des Mischers erfüllen konnte. Nach kurzer Mischzeit wurde das Heiz/Kühl-System auf Kühlen umgeschaltet und solange gekühlt, bis genügend Mineralöl kondensiert war, um das gesamte Pigmentpulver zu benetzen. Gegebenenfalls kann man noch weiter Kohlenwasserstoffdampf zuführen und diesen kondensieren, wenn eine Farbdispersion gewünscht wird.

Dieser nasse Farbstoff bzw. die Farbstoffdispersion ließ sich durch Einrühren von 41 kg eines Harzbindemittels zu einer einsetzbaren Druckfarbe verarbeiten.

### Beispiel 2

Zur Herstellung einer Dispersion eines Magnetpulvers, die zur Herstellung von Informationsträgern benötigt wird, wurden 25 kg Eisenoxidpigment mit insgesamt 50 kg Cyclohexanon angefeuchtet und zu der Dispersion des gewünschten Feststoffgehalts verarbeitet.

In diesem Fall folgte die Benetzung des Pigmentpulvers in einer Wirbelschicht, wobei der Dampf von Cyclohexanon als Trägergas diente. In der Wirbelschicht fand der Gasaustausch der Luft im heißen Pulver gegen den Dampf des Dispersionsmediums statt. In der Anfangsstufe des Verfahrens wurde aus dem Wirbelschichtreaktor ein Gemisch aus Luft und Dispersionsmediumsdampf ausgetragen. Sobald durch fortlaufende Verdünnung der Luftgehalt des den Wirbelschichtreaktor verlassenden Gases ausreichend abgesenkt war, wurde mit Hilfe des Trägergases das Pigmentpulver pneumatisch in einen Kondensator gefördert, wo durch Kühlung eine Kondensation des Dampfes des Dispersionsmediums stattfand. Man erhielt zuerst ein lockeres, feuchtes Pigmentpulver und bei weiterer Kondensation von Dispersionsmedium die Pigmentdispersion mit dem gewünschten Feststoffgehalt.

Diese Pigmentdispersion konnte in üblicher Weise mit einer Lösung des Bindemittelharzes versetzt werden, z.B. einer Lösung von 12,5 kg Polyphenylharz in 12,5 kg Cyclohexanon, wodurch man eine Masse erhielt, die sich zum Auftrag auf das Trägermaterial des Informationsträgers eignete.

### Beispiel 3

Für die Herstellung einer roten Flexodruckfarbe wurden 19 kg rotes Eisenoxid benetzt und dispergiert, wozu 40 kg Ethanol, 10 kg n-Propanol und 8 kg Toluol dienten.

Die Vorgehensweise entsprach im wesentlichen den Maßnahmen des Beispiels 1.

## Patentansprüche

1. Verfahren zum Herstellen einer Flüssigkeits-Feststoffdispersion mit schwer benetzbarem Pulver,
dadurch **gekennzeichnet**, daß man
a) in dem Pulver vorhandene Luft gegen den Dampf eines flüssigen Dispersionsmediums austauscht und
b) solange Dispersionsmedium in dem Pulver kondensiert, bis eine Dispersion mit dem gewünschten Feststoffgehalt erreicht ist.

2. Verfahren nach Anspruch 1,
dadurch **gekennzeichnet,** daß man die Luft gegen den Dampf des Dispersionsmediums austauscht, indem man die Pulver-Schüttung evakuiert, worauf der Dampf des Dispersionsmediums eingepreßt und dann kondensiert wird.

3. Verfahren nach Anspruch 1 oder 2,
dadurch **gekennzeichnet**, daß man das Pulver vorwärmt.

4. Verfahren nach Anspruch 1,
dadurch **gekennzeichnet**, daß man die Luft gegen den Dampf des Dispersionsmediums in einer Wirbelschicht des Pulvers austauscht.

5. Verfahren nach einem der Ansprüche 2 bis 4,
dadurch **gekennzeichnet**, daß man den Dampf des Dispersionsmediums stoßweise oder gepulst einführt.

6. Verfahren nach einem der Ansprüche 1 bis 5,
dadurch **gekennzeichnet**, daß man Agglomerate durch Einwirkung von Scherkräften, mechanischen Schwingungen oder Ultraschallenergie zerteilt.

7. Verfahren nach einem der Ansprüche 1 bis 6,
dadurch **gekennzeichnet,** daß als Pulver Pigmente, insbesondere für Druckverfahren und Magnetbänder, Füllstoffe oder Kohlenstaub sowie Pulver für pharmazeutische Zwecke verwendet werden.

## Claims

1. Method for making a solid-in-liquid dispersion using a hardly wettable powder,
said method being **characterized** in that
a) one replaces the air which exists in the powder with the vapour of a liquid dispersion medium, and
b) that one continues condensation of the dispersion medium within the powder as long as it is necessary to obtain a dispersion having the desired solids content.

2. Method according to claim 1,
**characterized** in that one replaces the air with the vapour of the dispersion medium by having the bulk powder masses evacuated, whereupon the vapour of the dispersion medium will be injected and then condensed.

3. Method according to claim 1 or 2,
**characterized** in that one preheats the powder.

4. Method according to claim 1,
**characterized** in that one replaces the air with the vapour of the dispersion medium within a fluidized layer of the powder.

5. Method according to any of claims 2 to 4,
**characterized** in that one introduces the vapour of the dispersion medium in an intermittent or pulsed manner.

6. Method according to any of claims 1 to 5,
**characterized** in that one breaks up agglomerates by submitting them to shear forces, mechanical vibrations or ultrasonic energy.

7. Method according to any of claims 1 to 6,
**characterized** in that the powder used is pigments, particularly for printing methods and magnetic tapes, fillers or coal dust as well as powders for pharmaceutical purposes.

## Revendications

1. Procédé de fabrication d'une dispersion solide dans liquide employant une poudre difficilement mouillable,
ledit procédé **caractérisé** en ce que
a) l'on remplace l'air qui existe dans la poudre par la vapeur d'un milieu dispersant liquide, et
b) que l'on effectue une condensation du milieu dispersant dans la poudre aussi longtemps qu'il est nécessaire pour obtenir une dispersion présentant la teneur en solide désirée.

2. Procédé selon la revendication 1,
**caractérisé** en ce que l'on remplace l'air par la vapeur du milieu dispersant en effectuant une évacuation de la masse de poudre en vrac, après quoi la vapeur du milieu dispersant est injectée et soumise après à la condensation.

3. Procédé selon la revendication 1 ou 2,
**caractérisé** en ce que l'on préchauffe la poudre.

4. Procédé selon la revendication 1,
**caractérisé** en ce que l'on remplace l'air par la vapeur du milieu dispersant à l'intérieur d'une couche fluidisée de la poudre.

5. Procédé selon l'une quelconque des revendications 2 à 4,
**caractérisé** en ce que l'on introduit la vapeur du milieu dispersant d'une manière intermittente ou pulsée.

6. Procédé selon l'une quelconque des revendications 1 à 5,
**caractérisé** en ce que l'on décompose des agglomérats en faisant agir sur eux des efforts de gisaillement, des vibrations mécaniques ou l'énergie ultrasonique.

7. Procédé selon l'une quelconque des revendications 1 à 6,
**caractérisé** en ce que l'on emploi comme poudre des pigments, plus particulièrement pour des méthodes d'impression et pour des rubans magnétiques, des charges ou du poussier de charbon ainsi que des poudres destinées à l'usage pharmaceutique.
